# EUROPÄISCHE PATENTSCHRIFT

(11) **EP 3 630 430 B1**
(45) Veröffentlichungstag und Bekanntmachung des Hinweises auf die Patenterteilung: **06.03.2024**
(21) Anmeldenummer: 18730983.6
(22) Anmeldetag: 22.05.2018
(51) Int. Cl.: B27G 19/08, B23D 45/20

(54) **VORRICHTUNG UND VERFAHREN ZUM AUFTRENNEN EINER MATTE AUF EINEM TRANSPORTBAND**
MACHINE AND METHOD TO SEPARATE A BAND ON A TRANSPORT CONVEYOR
DISPOSITIF ET PROCEDE POUR SEPARER UNE BANDE SUR UN TAPIS DE TRANSPORT

(30) Priorität: 22.05.2017 DE 102017111182
(43) Veröffentlichungstag der Anmeldung: 08.04.2020
(73) Patentinhaber: Dieffenbacher Maschinenfabrik GmbH, 75059 Zaisenhausen (DE)
(72) Erfinder: KROLL, Detlef, 75059 Zaisenhausen (DE); HUESER, Johannes, 75059 Zaisenhausen (DE)
(74) Vertreter: Hartdegen, Helmut
(86) Internationale Anmeldenummer: PCT/EP2018/063423
(87) Internationale Veröffentlichungsnummer: WO 2018/215496

(56) Entgegenhaltungen:
- DE-A1- 2 408 319
- DE-A1- 3 217 941
- DE-A1-102014 006 544
- FR-A1- 2 534 833

## Beschreibung

Die Erfindung betrifft eine Vorrichtung zum Auftrennen einer Matte auf einem Transportband, bevorzugt im Zuge der Herstellung von Werkstoffplatten aus dieser Matte, nach dem Oberbegriff des Patentanspruches 1. Eine solche Vorrichtung ist aus dem Dokument DE 10 2014 006544 A1 bekannt.

Die Erfindung betrifft weiter ein Verfahren zum Auftrennen einer Matte auf einem Transportband, bevorzugt im Zuge der Herstellung von Werkstoffplatten aus dieser Matte, nach dem Oberbegriff des Patentanspruches 13.

Ein solches Verfahren ist aus dem Dokument DE 10 2014 006544 A1 bekannt.

Aus der DE 10 2005 052 943 A1 ist ein Verfahren und eine Vorrichtung zur Herstellung von Werkstoffplatten mit einer kontinuierlich arbeitenden Presse bekannt geworden, bei dem eine Pressgutmatte in einem Formstrang mittels einer Streumaschine auf einem endlos umlaufenden Formband erstellt und der Presse zur Verpressung in eine Werkstoffplatte zugeführt wird. Aus verschiedenen Gründen ist es nun notwendig, den kontinuierlichen Herstellungsvorgang zu unterbrechen und neu anzufahren. In beiden Fällen soll die Pressgutmatte mit einer geradlinigen Kante senkrecht zur

Formbandebene aufgetrennt werden. Dies hat den Vorteil dass beim Anfahren oder Abfahren der Fertigung gleichmäßige Druckverhältnisse über die Breite in der Presse herrschen und Nachteile dadurch vermieden werden. Insbesondere beim Anfahren werden in diesem Zusammenhang auch Verdoppelungen der Pressgutmatte im Einlaufbereich der Presse erfolgreich vermieden.

Neben herkömmlichen Trennmitteln hat sich insbesondere die Verwendung einer Diagonalsäge bewährt. Die Kreissäge wird in einem vorgegebenen Winkel und vorgegebener Geschwindigkeit zum bewegten Formband über die Breite geführt, so dass sich durch das "mitlaufen" der Diagonalsäge mit dem Formband respektive der Pressgutmatte der erwähnte geradlinige Trennschnitt in die Pressgutmatte einbringen lässt. Das Prinzip einer Diagonalsäge ist in der kontinuierlich arbeitenden Technik, insbesondere am Pressenauslauf zur Auftrennung eines kontinuierlich fortlaufenden Stranges an Material hinreichend bekannt und bewährt.

Die Diagonalsäge wird mit einem Sicherheitsabstand zum Transportband eingestellt, damit dieses nicht ungewollt beschädigt wird. Durch den Sicherheitsabstand wird aber die Matte nicht vollständig durchtrennt. Aber immer stärkere Vorverdichtungsprozesse nach der Streuung und/oder andere Leimsysteme bewirke mittlerweile ein sehr kompaktes Gefüge der Pressgutmatte, so dass der Sicherheitsabstand möglichst gegen Null tendieren soll, weil Einschnitte nicht zwingend immer zu einem Abriss der Pressgutmatte führen würden. Gleichzeitig würde aber ein Einschneiden der Diagonalsäge in das Transportband zu hohen Kosten und ungewollten Reparaturausfällen führen. Insbesondere können unerwartete Ereignisse, beispielsweise eine Falte oder Verunreinigungen auf der Rückseite des Transportbandes den Sicherheitsabstand obsolet machen. Auch eine Veränderung der Auflager der Diagonalsäge und/oder des stützenden Tisches des Transportbandes kann den Sicherheitsabstand überspringen. Schlussendlich könnte ein Problem der Linearführung oder des Antriebes ebenfalls unterwartet zu einem Absenken der Diagonalsäge und somit zu einem Einschnitt in das Transportband führen.

Mit DE 32 17 941 A1 ist eine Vorrichtung zur Bandumlenkung im Bereich der Schnittlinie bekannt geworden. Der bauliche Aufwand ist umfangreich und bedingt einen überproportionalen Verschleiß.

Die Aufgabe der vorliegenden Erfindung ist es mit einer Vorrichtung und einem Verfahren sicherzustellen, dass bei der Durchführung des Trennschnittes das Transportband nicht beschädigt wird. Gleichzeitig soll aber während der Produktion oder des Trennschnittes die Matte ohne schädigende Einflüsse transportiert werden können.

Die Aufgabe wird für eine Vorrichtung dadurch gelöst, dass ein Trennmittel aus Kunststoff und/oder aus Metall als Blech ausgebildet ist und im Bereich des Laufweges der Diagonalsäge und/oder der Schnittlinie zwischen der Matte und dem Transportband bewegbar angeordnet ist.

Durch das Einfügen eines Trennmittels zwischen die Matte und dem Transportband kann das Sägeblatt die Matte durchschneiden, ohne Gefahr zu laufen das Transportband zu beschädigen. Bevorzugt ist der Abstand zwischen dem Sägeblatt und dem Trennmittel nahezu null oder so eingestellt, dass die Matte sicher durchtrennt wird.

Bei einem bewegbaren Trennmittel kann dieses unter die Matte greifen oder mit der synchronisiert mit einem eigenen Antrieb oder wirkverbunden mit der Diagonalsäge zwischen das Transportband und die Matte einfahren. Bevorzugt drückt das Trennmittel mit einer vorgegebenen Kraft auf das Transportband.

Alternativ oder in Kombination kann das Trennmittel derart angeordnet sein, dass es die Matte von dem Transportband zumindest entlang der Schnittlinie abhebt und/oder das Transportband entgegen der Diagonalsäge mit einer Kraft beaufschlagt und/oder verschiebt. Besonders bevorzugt das Transportband in eine Vertiefung des stützenden Tisches oder entsprechender anderer Stützmittel verschoben.

Bevorzugt wird das Trennmittel der Bewegungskinematik der Diagonalsäge folgen oder besonders bevorzugt mit der Diagonalsäge wirkverbunden sein.

Alternativ oder in Kombination ist vorgesehen, dass eine die Diagonalsäge und das Trennmittel verbindende Halterung angeordnet ist, die beim Sägevorgang der Diagonalsäge nacheilt und bevorzugt so ausgestaltet ist, dass sie durch den Trennschnitt respektive den Schnittkanal hindurchgreift.

Alternativ oder in Kombination ist vorgesehen, dass in einer Warteposition der Diagonalsäge an der Seite des Transportbandes eine Rampe angeordnet ist, wobei bevorzugt die Rampe höher als der Tisch und/oder das Transportband angeordnet ist. In vorteilhafter Weise kann somit das bevorzugt unter Spannung stehende Trennmittel sicher auf dem Transportband anlanden ohne Gefahr zu laufen, dass es unter dem Transportband einfädelt. Alternativ kann das Trennmittel in der Warteposition oberhalb des Transportbandes übergreifend angeordnet sein und wird bei Bedarf abgesenkt, bevorzugt mit einer entsprechenden Kinematik des Laufweges an der Traverse.

Alternativ oder in Kombination ist vorgesehen, dass eine Einstellvorrichtung angeordnet ist, die das Trennmittel mit einer vorgegebenen, gegen das Transportband wirkenden Kraft beaufschlagt.

Alternativ oder in Kombination ist vorgesehen, dass das Trennmittel mit der Diagonalsäge höhenverstellbar, bevorzugt mit der Einstellvorrichtung, an einer Traverse angeordnet sind.

Alternativ oder in Kombination ist vorgesehen, dass an dem Trennmittel zur Trennung der Matte von dem Transportband eine geeignete Trennkante angeordnet ist, bevorzugt eine stumpfe Schneide, eine Schräge, eine Rundung oder dergleichen. Dies dient dazu, dass in Bewegungsrichtung des Trennmittels der Trennvorgang sanft und optimiert ablaufen kann. Bei stationären Trennmitteln ist die Trennkante entgegen der Transportrichtung und bei verschiebbaren Trennmitteln in der Regel in Schnittrichtung vorlaufend am Trennmittel angeordnet.

Alternativ oder in Kombination ist vorgesehen, dass Trennmittel aus Metall und/oder Kunststoff ausgebildet ist, bevorzugt aus einem Federstahl oder flexiblem Kunststoff.

Alternativ oder in Kombination ist vorgesehen, dass das Trennmittel in Schnittrichtung breiter als der Trennschnitt des Sägeblatts, bevorzugt zumindest so breit wie die Diagonalsäge ausgeführt ist.

Alternativ oder in Kombination ist vorgesehen, dass am Trennmittel im Bereich der Schnittlinie oder des Sägeblattes eine Vertiefung angeordnet ist.

In einer weiteren Lösung wird ein Verfahren zum Auftrennen einer auf einem Transportband kontinuierlich bewegten Matte mit einer über die Breite des Transportbandes verfahrbaren Diagonalsäge geschaffen, bei dem in vorteilhafterweise zumindest im Bereich der Diagonalsäge und/oder der Schnittlinie ein Trennmittel aus Kunststoff und/oder aus Metall als Blech ausgebildet ist und zwischen die Matte und dem Transportband eingebracht wird. Alternativ oder in Kombination ist vorgesehen, dass das Trennmittel eine synchronisierte Bewegung zur Diagonalsäge durchführt oder durch die Diagonalsäge selbst verfahren wird.

Bevorzugt ist vorgesehen, dass das Trennmittel mit einer vorgegebenen Kraft gegen das Transportband drückt.

Alternativ oder in Kombination ist vorgesehen, dass das Trennmitte aus einer Warteposition der Diagonalsäge an der Seite des Transportbandes von einer Rampe aus auf das Transportband gelangt, wobei bevorzugt die Rampe höher als der Tisch und/oder das Transportband angeordnet ist.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: eine erfindungsgemäße Vorrichtung in Draufsicht mit einer Transportrichtung der Matte von links nach rechts,
- Figur 2: einen Schnitt durch die erfindungsgemäße Vorrichtung senkrecht zur Transportebene und entlang der Schnittrichtung
- Figur 3: einen Schnitt durch die erfindungsgemäße Vorrichtung senkrecht zur Transportbandebene mit Blickrichtung entlang der Schnittrichtung.

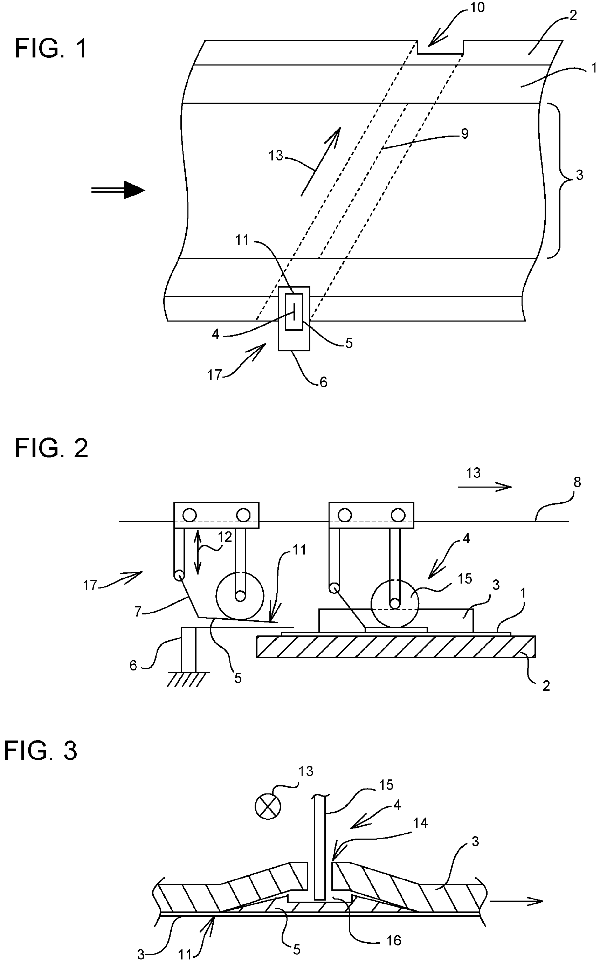

Figur 1 zeigt in Draufsicht eine Vorrichtung zur Trennung einer Matte 3 auf einem sich in Transportrichtung von links nach rechts bewegendem Transportband 2. Das Transportband wird 1 dabei von einem Tisch 2 gestützt. Die Diagonalsäge 4 steht in einer Warteposition 17 auf einer Rampe 6 neben dem Transportband 1. Wird der Trennvorgang gestartet verfährt die Diagonalsäge entlang einer Traverse 8 (hier nicht dargestellt) entlang der Schnittrichtung 13 respektive der Schnittlinie 9. Durch die diagonale Anordnung wird die Diagonalsäge 4 genauso schnell in Transportrichtung verfahren wie die Matte 3, die somit für die Diagonalsäge quasi still steht. Während des Verfahrweges schiebt sich das Trennmittel 5 unterhalb der Diagonalsäge 4 zwischen die Matte 3 und dem Transportband und der Trennschnitt 14 kann sicher ausgeführt werden. Die Trennkante 11 in Schnittrichtung dem Trennmittel 5 vorgelagert erleichtert die Aufnahme der Matte 5 bzw. das zwischenschieben, ähnliche wie bei einem Kuchenheber.

Ein einer bevorzugten Ausführungsform weist der Tisch 2 entlang der Schnittlinie 2 eine Vertiefung aus, damit das Transportband 1 etwas nach unten nachgeben kann und die Aufnahme der Matte 3 auf das Trennmittel 5 erleichtert wird. Auf der anderen Seite des Transportbandes und in einer Art Rückkehrposition wird die Diagonalsäge 4 soweit angehoben, dass es mit dem Trennmittel 5 wieder in die Warteposition 17 zurückfahren kann ohne in Eingriff mit der Matte 3 zu gelangen.

Figur 2 zeigt einen Schnitt durch die erfindungsgemäße Vorrichtung senkrecht zur Transportebene und entlang der Schnittrichtung 13, wobei die Diagonalsäge diesmal sichtbar an der Traverse 8 mit einer nicht näher erläuterten Fahrvorrichtung bewegbar ist. Die Darstellung zeigt links die Diagonalsäge in Warteposition 17 auf der Rampe 6, wobei durch die schräge Anordnung des Trennmittels 5 die nach unten wirkende Kraft symbolisch dargestellt sein soll. Die Halterung 7 ist mit der Traverse 8 bzw. der Bewegungskinematik der Diagonalsäge 4 oder der Diagonalsäge 4 selbst verbunden. An geeigneter Stelle kann eine Einstellvorrichtung 12 vorgesehen sein, die mechanische oder aktivierbare Stellglieder einen Druck in Transportbandrichtung auf das Trennmittel 5 ausübt. Dies soll es der Trennkante 11 erleichtern zwischen der Matte 3 und dem Transportband hindurchzugleiten. Rechts erkennt man die Diagonalsäge 4 respektive das Sägeblatt 15 im Eingriff mit der Matte 3 zur Durchführung des Trennschnitts 14.

Figur 3 zeigt einen Schnitt durch die erfindungsgemäße Vorrichtung senkrecht zur Transportbandebene mit Blickrichtung entlang der Schnittrichtung 13. In einer bevorzugten Ausführungsform weist das Trennmittel 16 eine Vertiefung im Bereich der Diagonalsäge 4 respektive dessen Sägeblatts 15 auf, damit immer noch ein gewisser Sicherheitsabstand gegenüber dem Trennmittel 5 eingehalten werden kann und die Matte 3, welche sich von links mit dem Transportband von links nach rechts bewegt, sicher durchgeschnitten werden kann.

Nicht dargestellt, aber auch aus dieser Zeichnung herauslesbare wäre es wenn alternativ das Trennmittel 5 stationär angeordnet wäre und das Sägeblatt 4 sich entlang der Schnittrichtung 13 in der Vertiefung 16 oder über ein flaches Trennmittel bewegt wird. Dies würde bedeuten, dass während der Produktion die Matte immer über das Trennmittel hinüber transportiert werden würde. Bevorzugt wäre in diesem Fall die Höhe des Trennmittels links von der Vertiefung höher als rechts, damit die Matte ähnlich einer Schanze sicher das Trennmittel überwinden kann. Gerade kompakte Vliese können bereits eine derart große innere Adhäsionskraft aufweisen, dass dieser Übergang nicht auffällt oder stört. 1020

### Bezugszeichenliste: ZP1020PC

1. Transportband
2. Tisch
3. Matte
4. Diagonalsäge
5. Trennmittel
6. Startrampe
7. Halterung
8. Traverse
9. Schnittlinie
10. Vertiefung
11.Trennkante
12.Einstellvorrichtung
13.Schnittrichtung
14.Trennschnitt
15.Sägeblatt
16. Vertiefung
17.Warteposition

## Patentansprüche

1. Vorrichtung zum Auftrennen einer auf einem Transportband kontinuierlich bewegten Matte (3) mit einer über die Breite des Transportbandes (1) verfahrbaren Diagonalsäge (4), **dadurch gekennzeichnet, dass** ein Trennmittel (5) aus Kunststoff und/oder aus Metall als Blech ausgebildet ist und im Bereich des Laufweges der Diagonalsäge (4) und/oder entlang der Schnittlinie (9) zwischen der Matte (3) und dem Transportband (1) bewegbar angeordnet ist.

2. Vorrichtung nach Anspruch 1, **dadurch gekennzeichnet, dass** das Trennmittel (5) mit einer vorgegebenen Kraft auf das Transportband (1) drückt.

3. Vorrichtung nach einem der vorhergehenden Ansprüche, **dadurch gekennzeichnet, dass** das Trennmittel (5) derart angeordnet ist, dass es die Matte (3) von dem Transportband (1) zumindest entlang der Schnittlinie (9) abhebt und/oder das Transportband (1) entgegen der Diagonalsäge (4) mit einer Kraft beaufschlagt und/oder verschiebt, und besonders bevorzugt das Transportband (1) in eine Vertiefung (10) des stützenden Tisches (2) verschiebt.

4. Vorrichtung nach einem der vorhergehenden Ansprüche 1 bis 3, **dadurch gekennzeichnet, dass** das Trennmittel (5)der Bewegungskinematik der Diagonalsäge (4) folgt und bevorzugt mit der Diagonalsäge (4) wirkverbunden ist.

5. Vorrichtung nach Anspruch 4, **dadurch gekennzeichnet, dass** eine die Diagonalsäge (4) und das Trennmittel (5) verbindende Halterung (7) angeordnet ist, die beim Sägevorgang der Diagonalsäge (4) nacheilt und bevorzugt so ausgestaltet ist, dass sie durch den Schnittkanal hindurchgreift.

6. Vorrichtung nach Anspruch 4 oder 5, **dadurch gekennzeichnet, dass** in einer Warteposition der Diagonalsäge (4) an der Seite des Transportbandes (1) eine Rampe (6) angeordnet ist, wobei bevorzugt die Rampe (6) höher als der Tisch (2) und/oder das Transportband (1) angeordnet ist.

7. Vorrichtung nach einem der Ansprüche 4 bis 6, **dadurch gekennzeichnet, dass** eine Einstellvorrichtung (12) angeordnet ist, die das Trennmittel (5) mit einer vorgegebenen, gegen das Transportband (1) wirkenden Kraft beaufschlagt.

8. Vorrichtung nach einem der Ansprüche 4 bis 7, **dadurch gekennzeichnet, dass** das Trennmittel (5) mit der Diagonalsäge höhenverstellbar, bevorzugt mit der Einstellvorrichtung (12), an einer Traverse (8) angeordnet sind.

9. Vorrichtung nach einem der vorhergehenden Ansprüche, **dadurch gekennzeichnet, dass** an dem Trennmittel (5) zur Trennung der Matte (3) von dem Transportband (1) eine geeignete Trennkante (11) angeordnet ist, bevorzugt eine stumpfe Schneide, eine Schräge, eine Rundung oder dergleichen.

10. Vorrichtung nach einem der vorhergehenden Ansprüche, **dadurch gekennzeichnet, dass** das Trennmittel (5) aus Metall aus einem Federstahl ausgebildet ist.

11. Vorrichtung nach einem der vorhergehenden Ansprüche, **dadurch gekennzeichnet, dass** das Trennmittel (5) in Schnittrichtung (13) breiter als der Trennschnitt (14) des Sägeblatts (15), bevorzugt zumindest so breit wie die Diagonalsäge (4) ausgeführt ist.

12. Vorrichtung nach einem der vorhergehenden Ansprüche, **dadurch gekennzeichnet, dass** am Trennmittel (5) im Bereich der Schnittlinie oder des Sägeblattes (15) eine Vertiefung (16) angeordnet ist.

13. Verfahren zum Auftrennen einer auf einem Transportband kontinuierlich bewegten Matte (3) mit einer über die Breite des Transportbandes (1) verfahrbaren Diagonalsäge (4), **dadurch gekennzeichnet, dass** zumindest im Bereich der Diagonalsäge (4) und/oder entlang der Schnittlinie (9) ein Trennmittel (5) aus Kunststoff und/oder aus Metall als Blech ausgebildet ist und zwischen die Matte (3) und dem Transportband (1) eingebracht wird.

14. Verfahren nach Anspruch 13, **dadurch gekennzeichnet, dass** das Trennmittel (5) eine synchronisierte Bewegung zur Diagonalsäge (4) durchführt oder durch die Diagonalsäge (4) verfahren wird.

15. Verfahren nach Anspruch 13, **dadurch gekennzeichnet, dass** das Trennmittel (5) mit einer vorgegebenen Kraft gegen das Transportband (1) drückt.

16. Verfahren nach einem der vorhergehenden Verfahrensansprüche, **dadurch gekennzeichnet, dass** das Trennmitte (5) aus einer Warteposition der Diagonalsäge (4) an der Seite des Transportbandes (1) von einer Rampe (6) aus auf das Transportband (1) gelangt, wobei bevorzugt die Rampe (6) höher als der Tisch (2) und/oder das Transportband (1) angeordnet ist.

## Claims

1. Device for dividing a mat (3) moved continuously on a conveyor belt by means of a diagonal saw (4) movable across the width of the conveyor belt (1), **characterized in that** a separating means (5) made of plastic and/or metal is designed as a sheet and is arranged movably in the region of the path of the diagonal saw (4) and/or along the cutting line (9) between the mat (3) and the conveyor belt (1).

2. Device according to claim 1, **characterized in that** the separating means (5) presses on the conveyor belt (1) with a predetermined force.

3. Device according to one of the preceding claims, **characterized in that** the separating means (5) is arranged in such a way that it lifts the mat (3) off the conveyor belt (1) at least along the cutting line (9) and/or applies a force to and/or displaces the conveyor belt (1) against the diagonal saw (4), and particularly preferably displaces the conveyor belt (1) into a recess (10) of the supporting table (2).

4. Device according to one of the preceding claims 1 to 3, **characterized in that** the separating means (5) follows the movement kinematics of the diagonal saw (4) and is preferably operatively connected to the diagonal saw (4).

5. Device according to claim 4, **characterized in that** a holder (7) connecting the diagonal saw (4) and the separating means (5) is arranged, which follows the diagonal saw (4) during the sawing process and is preferably designed in such a way that it engages through the cutting channel.

6. Device according to claim 4 or 5, **characterized in that** in a waiting position of the diagonal saw (4), a ramp (6) is arranged on the side of the conveyor belt (1), wherein the ramp (6) is preferably arranged higher than the table (2) and/or the conveyor belt (1).

7. Device according to one of claims 4 to 6, **characterized in that** an adjusting device (12) is arranged, which acts on the separating means (5) with a predetermined force acting against the conveyor belt (1).

8. Device according to one of the claims 4 to 7, **characterized in that** the separating means (5) with the diagonal saw is arranged on a traverse (8) in a height-adjustable manner, preferably with the adjusting device (12).

9. Device according to one of the preceding claims, **characterized in that** a suitable separating edge (11) is arranged on the separating means (5) for separating the mat (3) from the conveyor belt (1), preferably a blunt cutting edge, a bevel, a rounding or the like.

10. Device according to one of the preceding claims, **characterized in that** the separating means (5) is made of metal from a spring steel.

11. Device according to one of the preceding claims, **characterized in that** the separating means (5) is wider in the cutting direction (13) than the separating cut (14) of the saw blade (15), preferably at least as wide as the diagonal saw (4).

12. Device according to one of the preceding claims, **characterized in that** a recess (16) is arranged on the separating means (5) in the region of the cutting line or of the saw blade (15).

13. Method for dividing a mat (3) moved continuously on a conveyor belt by means of a diagonal saw (4) movable across the width of the conveyor belt (1), **characterized in that** at least in the region of the diagonal saw (4) and/or along the cutting line (9) a separating means (5) made of plastic and/or metal is designed as a sheet and is introduced between the mat (3) and the conveyor belt (1).

14. Method according to claim 13, **characterized in that** the separating means (5) performs a synchronized movement to the diagonal saw (4) or is moved by the diagonal saw (4).

15. Method according to claim 13, **characterized in that** the separating means (5) presses against the conveyor belt (1) with a predetermined force.

16. Method according to one of the preceding method claims, **characterized in that** the separating means (5) moves from a waiting position of the diagonal saw (4) on the side of the conveyor belt (1) from a ramp (6) onto the conveyor belt (1), wherein the ramp (6) is preferably arranged higher than the table (2) and/or the conveyor belt (1).

## Revendications

1. Dispositif pour sectionner une nappe (3) déplacée en continu sur un convoyeur à bande transporteuse (1) avec une scie diagonale (4) déplaçable sur la largeur de la bande transporteuse, **caractérisé en ce qu'**un moyen de séparation (5) en plastique et/ou en métal est conformé comme une tôle et disposé de façon à pouvoir se déplacer au niveau de la trajectoire de la scie diagonale (4) et/ou le long de la ligne de coupe (9) entre la nappe (3) et la bande transporteuse (1).

2. Dispositif selon la revendication 1, **caractérisé en ce que** le moyen de séparation (5) appuie sur la bande transporteuse (1) avec une force prédéterminée.

3. Dispositif selon l'une des revendications précédentes, **caractérisé en ce que** le moyen de séparation (5) est disposé de telle manière qu'il soulève la nappe (3) de la bande transporteuse (1) au moins le long de la ligne de coupe (9) et/ou exerce une force sur la bande transporteuse (1) et/ou la déplace en sens inverse de la scie diagonale (4) et, de préférence, déplace la bande transporteuse (1) dans un creux (10) de la table d'appui (2).

4. Dispositif selon l'une des revendications 1 à 3, **caractérisé en ce que** le moyen de séparation (5) suit la cinématique de mouvement de la scie diagonale (4) et est de préférence en liaison active avec la scie diagonale (4).

5. Dispositif selon la revendication 4, **caractérisé en ce qu'**est prévue une fixation (7) reliant la scie diagonale (4) et le moyen de séparation (5), qui suit la scie diagonale (4) pendant le sciage et qui est de préférence conçue pour passer à travers le canal de coupe.

6. Dispositif selon la revendication 4 ou 5, **caractérisé en ce qu'**une rampe (6) est disposée sur le côté de la bande transporteuse (1) dans la position d'attente de la scie diagonale (4), laquelle rampe (6) est de préférence disposée plus haut que la table (2) et/ou que la bande transporteuse (1).

7. Dispositif selon l'une des revendications 4 à 6, **caractérisé en ce qu'**est prévu un dispositif de réglage (12) qui exerce sur le moyen de séparation (5) une force prédéterminée agissant contre la bande transporteuse (1).

8. Dispositif selon l'une des revendications 4 à 7, **caractérisé en ce que** le moyen de séparation (5) est disposé avec la scie diagonale de façon réglable en hauteur, de préférence avec le dispositif de réglage (12), sur une traverse (8).

9. Dispositif selon l'une des revendications précédentes, **caractérisé en ce qu'**est prévu sur le moyen de séparation (5), pour séparer la nappe (3) de la bande transporteuse (1), une arête de coupe (11) adéquate, de préférence une lame émoussée, un biseau, un arrondi ou similaire.

10. Dispositif selon l'une des revendications précédentes, **caractérisé en ce que** le moyen de séparation (5) est fabriqué en métal à partir d'un acier à ressorts.

11. Dispositif selon l'une des revendications précédentes, **caractérisé en ce que** le moyen de séparation (5) est plus large dans le sens de coupe (13) que la découpe de séparation (14) de la lame de scie (15), de préférence au moins aussi large que la scie diagonale (4).

12. Dispositif selon l'une des revendications précédentes, **caractérisé en ce qu'**un creux (16) est formé sur le moyen de séparation (5) au niveau de la ligne de coupe ou de la lame de scie (15).

13. Procédé pour sectionner une nappe (3) déplacée en continu sur une bande transporteuse avec une scie diagonale (4) déplaçable sur la largeur de la bande transporteuse (1), **caractérisé en ce qu'**un moyen de séparation (5) en plastique et/ou en métal est conformé comme une tôle au moins au niveau de la scie diagonale (4) et/ou le long de la ligne de coupe (9) et inséré entre la nappe (3) et la bande transporteuse (1).

14. Procédé selon la revendication 13, **caractérisé en ce que** le moyen de séparation (5) effectue un mouvement synchronisé vers la scie diagonale (4) ou est déplacé par la scie diagonale (4).

15. Procédé selon la revendication 13, **caractérisé en ce que** le moyen de séparation (5) appuie avec une force prédéterminée contre la bande transporteuse (1).

16. Procédé selon l'une des revendications de procédé précédentes, **caractérisé en ce que** le moyen de séparation (5) passe, à partir d'une position d'attente de la scie diagonale (4) sur un côté de la bande transporteuse (1), d'une rampe (6) à la bande transporteuse (1), la rampe (6) étant de préférence disposée plus haut que la table (2) et/ou que la bande transporteuse (1).
